(19) Europäisches Patentamt
European Patent Office
Office européen des brevets

(11) **EP 4 625 346 A1**

(12) **EUROPEAN PATENT APPLICATION**

(43) Date of publication:
01.10.2025 Bulletin 2025/40

(21) Application number: 25165689.8

(22) Date of filing: 24.03.2025

(51) International Patent Classification (IPC):
*G06V 10/26* (2022.01)    *G06V 10/774* (2022.01)
*G06V 10/82* (2022.01)    *G06T 5/60* (2024.01)
*G06T 7/00* (2017.01)

(52) Cooperative Patent Classification (CPC):
**G06V 10/26; G06T 5/60; G06T 5/70; G06V 10/774;
G06V 10/82;** G06T 2207/20081; G06T 2207/20084;
G06V 10/30; G06V 2201/03

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 25.03.2024 US 202463569576 P

(71) Applicant: **Perimeter Medical Imaging AI, Inc.**
**Toronto, Ontario M5V 3B1 (CA)**

(72) Inventors:
• **BAYRAM, Ersin**
**Toronto, M5V 3B1 (CA)**
• **NGUYEN, Duc Huy Hoang**
**Toronto, M5V 3B1 (CA)**
• **LEVY, Yanir**
**Toronto, M5V 3B1 (CA)**
• **REMPEL, David**
**Toronto, M5V 3B1 (CA)**
• **PUNITHAKUMAR, Kumaradevan**
**Toronto, M5V 3B1 (CA)**
• **CHEN, Youwei**
**Toronto, M5V 3B1 (CA)**

(74) Representative: **Potter Clarkson**
**Chapel Quarter**
**Mount Street**
**Nottingham NG1 6HQ (GB)**

(54) **KNOWLEDGE DISTILLATION BASED MACHINE LEARNING MODELS FOR MEDICAL IMAGE ENHANCEMENT**

(57) At least a method for training a target machine learning model for enhancing a digital image processing is provided. The method comprises receiving a first data set including a first plurality of digital images, training a first machine learning model using the first data set and a second data set including a second plurality of digital images, generating, by the first machine learning model that is trained, a target data set including a third plurality of digital images, the third plurality of digital images having noise represented by respective noise values that are lower than the noise represented by the respective noise values of the first plurality of digital images, and training the target machine learning model using the target data set and the first data set including the first plurality of digital images for enhancing at least one characteristic of a new digital image.

900

```
┌────────────────────────────────────────────────────────────────┐
│ Receive a first data set including a first plurality of digital  │
│ images, the first plurality of digital images including noise    │
│ represented by respective noise values                           │
│                            902                                   │
└────────────────────────────────────────────────────────────────┘
                              │
┌────────────────────────────────────────────────────────────────┐
│ Train a first machine learning model using the first data set    │
│ and a second data set including a second plurality of images     │
│                            904                                   │
└────────────────────────────────────────────────────────────────┘
                              │
┌────────────────────────────────────────────────────────────────┐
│ Generate, by the first machine learning model that is trained,   │
│ a target data set including a third plurality of digital images  │
│                            906                                   │
└────────────────────────────────────────────────────────────────┘
                              │
┌────────────────────────────────────────────────────────────────┐
│ Train the target machine learning model using the target data    │
│ set and the first data set including the first plurality of       │
│ digital images for enhancing at least one characteristic of a    │
│ new digital image                                                │
│                            908                                   │
└────────────────────────────────────────────────────────────────┘
```

FIG. 9

EP 4 625 346 A1

**Description**

**TECHNICAL FIELD**

The subject matter described herein generally relates to training machine learning models for analyzing images, and more particularly, to knowledge distillation based training of machine learning models for image generation, analysis, and enhancement.

**BACKGROUND**

Medical image processing is utilized in the medical industry to assist in the diagnosis and treatment of patients in various environments, including, for example, in hospital operating rooms, medical clinics, urgent care centers, and so forth. With rapid advances in computing, data communication techniques, and data storage technologies, the use of medical imaging has become prevalent and is accompanied by significant improvements in image scanning and generation capabilities. Deficiencies, however, persist. Specifically, current imaging techniques continue to suffer from low signal to noise ("SNR") and contrast to noise ("CNR") ratios, which result in image artifacts. Artifacts degrade image quality, which leads to image interpretation errors and inhibits the ability of health care providers to treat patients.

**SUMMARY**

In aspects, a computer-implemented method for training a target machine learning model for digital image processing. In aspects, a first data set including a first plurality of digital images can be received. The first plurality of digital images can include noise represented by respective noise values. In aspects, a first machine learning model can be trained using the first data set and a second data set, which includes a second plurality of digital images. In aspects, the second plurality of digital images can have noise represented by respective noise values lower than respective noise values of the first plurality of digital images. In aspects, the first machine learning mode that is trained can generate a target data set including a third plurality of digital images. In aspects, the third plurality of digital images can have noise represented by respective noise values that are lower than the noise represented by the respective noise values of the first plurality of digital images. In aspects, the target machine learning model can be trained using the target data set and the first data set including the first plurality of digital images for enhancing at least one characteristic of a new digital image. In aspects, the enhancing can include reducing a new noise value specific to the new digital image.

In aspects, the noise values represent random variations of one or more pixels of at least one of the plurality of digital images. In aspects, the noise values obscure an aspect of at least a digital image of the first plurality of digital images. In aspects, the noise values are inversely proportional to signal to noise ratios of the first plurality of digital images. In aspects, the noise values are inversely proportional to contrast to noise rations of the first plurality of digital images. In aspects, the first machine learning model can correspond to a cGAN machine learning model and the target machine learning model corresponds to a UNET machine learning model.

In another aspect, a system comprising one or more computers and one or more storage devices is contemplated. The one or more storage devices store instructions that are operable, when executed by the one or more computers, to cause the one or more computers to perform operations comprising receiving a first data set including a first plurality of digital images, the first plurality of digital images including noise represented by respective noise values, training a first machine learning model using the first data set and a second data set including a second plurality of digital images, the second plurality of digital images including noise represented by respective noise values lower than respective noise values of the first plurality of digital images, generating, by the first machine learning model that is trained, a target data set including a third plurality of digital images, the third plurality of digital images having noise represented by respective noise values that are lower than the noise represented by the respective noise values of the first plurality of digital images, and training a target machine learning model using the target data set and the first data set including the first plurality of digital images for enhancing at least one characteristic of a new digital image, the enhancing including reducing a new noise value specific to the new digital image.

In yet another aspect, a non-transitory computer readable storage media is provided. The non-transitory computer readable storage media, when executed by one or more data processors, causes the one or more data processors to perform operations comprising receiving a first data set including a first plurality of digital images, the first plurality of digital images including noise represented by respective noise values, training a first machine learning model using the first data set and a second data set including a second plurality of digital images, the second plurality of digital images including noise represented by respective noise values lower than respective noise values of the first plurality of digital images, generating, by the first machine learning model that is trained, a target data set including a third plurality of digital images, the third plurality of digital images having noise represented by respective noise values that are lower than the noise represented by the respective noise values of the first plurality of digital images, and training a target machine learning model using the target data set and the first data set including the first plurality of digital images for enhancing at least one characteristic of a new digital image, the enhancing including reducing a new noise value specific to the new digital image.

## BRIEF DESCRIPTION OF THE FIGURES

FIG. 1 depicts numerous computing environments in which a knowledge distillation based machine learning model of the present disclosure can be implemented, according to some aspects described and illustrated herein;

FIG. 2 depicts an Optical Coherence Tomography ("OCT") image with formulas for determining SNR and CNR of an image;

FIG. 3A illustrates an example set of machine learning models included as part of the teacher model and the student model for training the knowledge distillation based machine learning model, according to some aspects described and illustrated herein;

FIG. 3B illustrates a deep learning reconstruction framework utilized to train the knowledge distillation based machine learning model, according to some aspects described and illustrated herein;

FIG. 4 illustrates an architectural overview of the Conditional Generative Adversarial Network ("cGAN") machine learning model of the teacher model, according to some aspects described and illustrated herein;

FIG. 5 illustrates a version of the cGAN model implemented as part of the teacher model as described in the present disclosure, according to one or more aspects described and illustrated herein;

FIG. 6 illustrates an architectural overview of the UNET machine learning model of the student model, according to some aspects described and illustrated herein;

FIG. 7 summarizes the results of the knowledge distillation based ML model trained using the reduced noise dataset as compared to various additional results, according to some embodiments described and illustrated herein;

FIG. 8 illustrates the results of an image that is enhanced using the knowledge distillation based machine learning model of the present disclosure, according to some aspects described and illustrated herein;

FIG. 9 depicts a flow chart listing a set of steps for training the knowledge distillation based machine learning model of the present disclosure, according to some aspects described and illustrated herein; and

FIG. 10 illustrates a schematic diagram of an example computing system.

## DETAILED DESCRIPTION

Advancements in computing, data storage, and data communication technologies have resulted in the widespread use of medical imaging to diagnose and treat patients. However, current medical imaging techniques continue to suffer from numerous deficiencies, foremost among which are high noise levels, which result in images having low SNR and low CNR ratios. It is noted that term "noise" pertains to an unexpected change in pixel values of an image or a random variation in an image signal that degrades the visual quality of the image. These deficiencies adversely impact the ability of health care providers to accurately diagnose patients, provide effective treatment, perform critical surgical procedures, and so forth. Some techniques mitigate at least some of these deficiencies. For example, one technique utilized to improve the quality of images and the image scanning process includes scanning an image multiple times (e.g., and for a longer time frame) and averaging the results.

For example, surgeons may to need access near real time data of surgical oncology margins - the edge or border of a cancerous or tumorous tissue - to determine whether the tissue has been correctly excised. Based on various characteristics of a cancerous or tumorous tissue, e.g., nature of the tissue, volume and other dimensions of the tissue, location of the tissue, and so forth, at least six separate scanning processes may need to be implemented in order to assess all six margins for effective patient treatment. Scanning an image multiple times, however, may be unsuitable in an operating room environment, which requires surgeons and other medical staff to access data on approximately a real-time basis. In this scenario, rapid imaging is particularly advantageous, as the patients are sedated during the surgery. Reducing sedation times is advantages as longer sedation times can result in various patient complications, e.g., cognitive dysfunction, confusion, memory loss, and so forth. In aspects, multiple scanning and averaging actions (at least six) are computationally burdensome, cause surgical delays that inhibit the provision of quality care, and are unsuitable for situations in which near real-time data is useful. As such, the adverse effects of the scanning and averaging technique outweighs its drawbacks, especially when the results adversely affect the clinical decision making.

The knowledge distillation based training of machine learning models, as described in the present disclosure, address and overcome these deficiencies in current imaging techniques of poor image quality (e.g., low SNR and CNR) and computational delays. In particular, the knowledge distillation based training of machine learning models as described herein are able to generate a digital image with reduced noise, approximately on a near real-time basis, which significantly enhances the quality of the digital image, thereby enabling health care providers to more accurately analyze the subject matter of the digital image, e.g., to determine whether a tumorous tissue has been appropriately excised. For example, instead of scanning each margin in a group of six margins (e.g., sides of a tissue) at least twice and averaging the two scans, the knowledge distillation based training of the machine learning models described herein can generate accurate and better quality images that may be based on, e.g., a single scan.

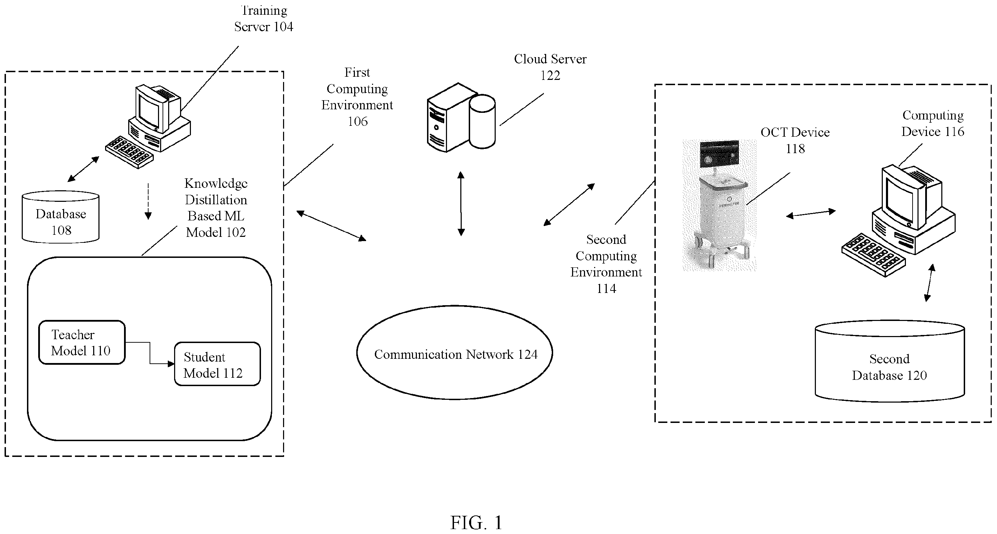

FIG. 1 depicts numerous computing environments in which a knowledge distillation based machine learning model 102 of the present disclosure can be implemented, according to some aspects described and illustrated herein. As illustrated, the knowledge distillation based machine learning (ML) model 102 can be trained in a training server 104 included in a first computing environment 106. In aspects, the server architecture (digital infrastructure) of the first computing environment 106 can include a database 108 communicatively coupled to the training server 104 that operates to store various types of data, e.g., data of medical images, training data associated with various medical images, testing data associated with various medical images, and so forth. In aspects, the architecture can further include a teacher model 110 and a student model 112. The teacher model 110 can operate in conjunction with the student model 112 to train the knowledge distillation based ML model 102. Aspects of the training process will be described in greater detail later on in this disclosure.

Further, in aspects, the knowledge distillation based ML model 102 can be deployed for use in a second computing environment 114, which includes a computing device 116, an OCT device 118, and a second database 120. Each of these devices can be communicatively coupled with each other, e.g., via wired and/or wireless connection. In aspects, the first computing environment 106 and the second computing environment 114 can also be communicatively coupled to a cloud server 122 via a communication network 124. In aspects, the communication network 124 can correspond to a wired or wireless connection.

In aspects, the second computing environment 114 can be installed as part of a surgical environment, e.g., an operating room. While performing an operation, a surgeon and his medical staff may, in their assessment, determine that a tumor has been completely and correctly excised. However, to confirm their assessment, especially in the margins of the tumor and healthy tissue, further analysis could be useful. To this end, the OCT device 118, on which the knowledge distillation based machine learning model 102 can be deployed, can analyze these margins (among other areas) and generate an image having lower noise (e.g., significantly lower noise) in a computationally efficient manner. Consequently, the image's SNR and CNR are increased, and the quality, resolution, and fidelity of the image are improved. In other words, such an image can more clearly display the margins of tumorous tissue and the healthy tissue. In aspects, the surgeons can have near real-time access to this information, which enables them to more accurately determine whether a tumor was excised correctly or if additional excisions have to be performed. The OCT device 118 can be communicatively coupled with the computing device 116 and the second database 120. In aspects, the second database 120 can be implemented as part of the computing device 116 or the OCT device 118.

Various types of data can be shared between one or more devices of the first computing environment 106, one or more devices of the second computing environment 114, and the cloud server 122, approximately in real time. As described herein, the term "real time" can refer to processing and/or communication that occurs instantaneously or within a short time period (e.g., a few seconds) such that there are minimal delays between a particular action (e.g., a request) and a processing step, communication step, and any other step implemented as a result of the request of any other action.

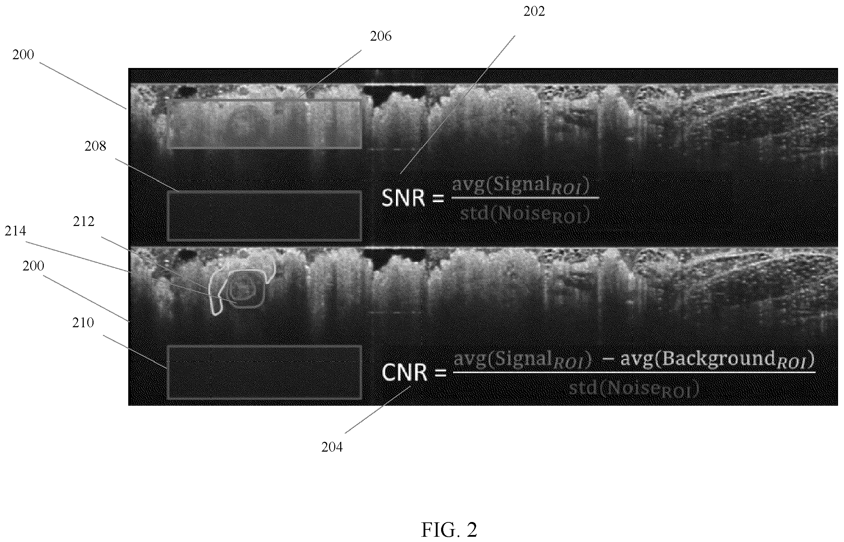

FIG. 2 depicts an OCT image (e.g., a digital image) with formulas for determining SNR and CNR of the image. As illustrated, an example OCT image 200 includes a SNR equation 202 for determining SNR and a CNR equation 204 for determining CNR. In particular, according to SNR equation 202, a SNR associated with an image can be determined by calculating an average of a signal of a region of interest and dividing that value with a standard deviation of a noise value of another region of interest extracted from the image. Additionally, according to the CNR equation 204, a CNR of an image can be determined by calculating an average of a signal of a region of interest, calculating an average value of a background of a region of interest of the signal, subtracting the average value of a background of the region of interest of the signal from the average of the signal of the region of interest, and dividing this value by a standard deviation of the noise of a region of interest extracted from the image. Due to attenuation, the bottom portion of the example OCT image 200 corresponds to noise. A standard deviation value can be calculated from this region. The OCT image 200 is of a sample clinical ductal carcinoma in situ (DCIS) (cancerous human tissue) that was scanned twice (2x scan) for understanding the impact on a clinically relevant feature.

As illustrated in FIG. 2, the region of interest of the signal for SNR purposes is indicated by a blue rectangular bounded region 206 and the noise of a region of interest for SNR purposes is indicated by a purple rectangular bounded region 208. Additionally, the noise of another region of interest for CNR purposes is indicated by another purple rectangular bounded region 210 and the background of the region of interest and the region of interest of the signal are depicted with yellow shape 212 and blue shape 214, respectively. In aspects, a variety of deep learning models can be utilized to remove noise (image signal distortion or random signal variation) to improve low SNR and CNR. Free form regions of interest are included on the image 200 in order to probe the contrast between the darker rim (blue shape 214) - a prominent feature indicative of DCIS in OCT images - relative to a fibrous background (yellow shape 212).

Regarding the SNR and CNR formulas listed on FIG. 2, it is noted that the purple rectangular bounded regions 208 and 210 are placed in the bottom portion of the image because this portion of the image includes primarily noise caused by signal attenuation, as light does not adequately penetrate this portion of the image. As such, this portion is suitable for noise measurement purposes. As indicated by the formula, SNR corresponds to an average of a signal of a region of interest divided by a standard deviation of a noise value of another region of interest extracted from the image. On the other hand, CNR corresponds to a difference between two tissues, namely one that corresponds to a background tissue and the other being the tissue of interest (e.g., for scanning purposes).

Table 1 below lists a number of SNR and CNR measurements of the sample DCIS based on a conventional twice scan based image reconstruction and Deep Learning Reconstruction (DLR) of an image.

Table 1

|  | SNR | CNR | SNR Ratio | CNR Ratio |
|---|---|---|---|---|
| Conventional (2x) | 17.9 | 1.3 | 1.0 | 1.0 |
| DLR | 58.8 | 4.4 | 3.3 | 3.5 |

DLR images resulted in 3.3 times the SNR of the conventional reconstruction image that was scanned twice (i.e. 2x WF-OCT images) and 3.5 times the CNR of the conventional reconstruction image that was scanned twice (i.e. 2x WF-OCT images). As the original OCT image and the DLR images are colocalized (with no mismatch concerns), various measurements that were used for common regions of interest (ROI) provided an objective comparison of improvements in SNR and CNR.

To investigate the potential scan time savings, this design was integrated on a device and scan time values were benchmarked between 1x DLR scan versus 2x conventional OCT scan. It was observed that there was a 30% scan time reduction by reducing the number of scan averages from 2x to 1x. Scan time for a 66 $cm^2$ and a scan coverage of approximately 365 seconds were recorded and observer with a conventional 2x scan processing, while 251 seconds were observed with a single (1x) DLR scan. The theoretical scan time saving limit is approximately 50%, as the scan time is proportional to the number of averages. With improvements to the OCT device and streamlined AI integration (e.g., prescan optimizations, memory initializations ahead of scanning, implementing scan while reconstructing data, computational optimizations, etc.), 30% scan efficiency can be further improved towards the theoretical limit.

Reconstruction lag is another factor that affects total procedural efficiency, as the user needs to have access to the results nearly in real time. A key design constraint may be the use of lightweight UNET instead of a more sophisticated GAN model for implementation of the knowledge distillation based machine learning model 102 on, e.g., the OCT device 118 in a clinical setting. The lightweight UNET implementation, described in greater detail later on in this disclosure, resulted in a 6.2ms inferencing time for a single WF-OCT b-scan image of 420x2400 pixels, e.g., when using the mobile variant of the off-the-shelf NVIDIA GeForce RTX 3070 GPU. The inferencing time was 1 to 3 seconds for a typical margin of 200 to 500 b-scans, making the algorithm feasible for intraoperative use. An online reconstruction with overlapping acquisition and/or reconstruction can be implemented, in which perceived lag may be further reduced, resulting in the provision of approximately real time results. With a substantial improvement in SNR and CNR and an overall reduction in scan times, improved scanning techniques as described in the present disclosure may enable accurate image scanning with reduced computational processing burdens.

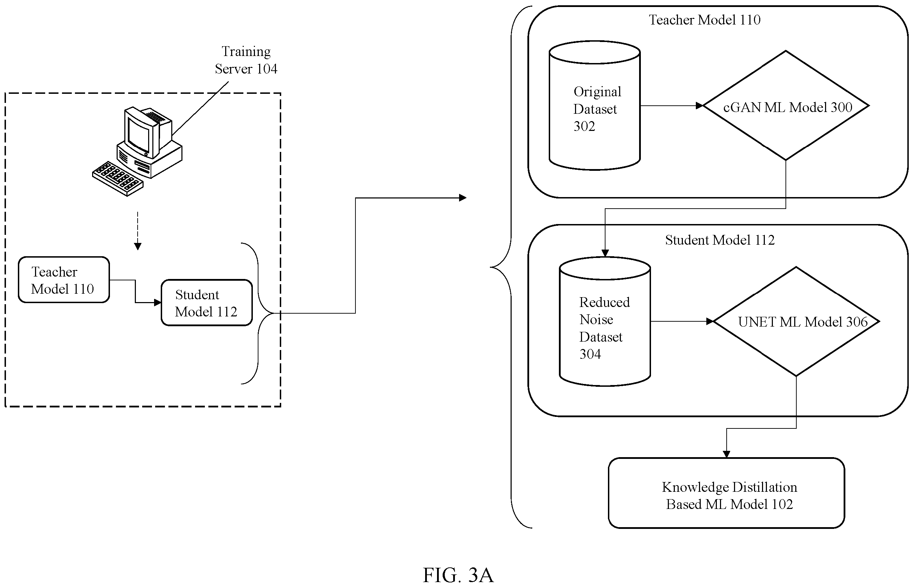

FIG. 3A illustrates an example set of machine learning models included as part of the teacher model 110 and the student model 112 for training the knowledge distillation based machine learning model 102, according to some aspects described and illustrated herein. The teacher model 110 is operable to generate digital images with significantly reduced noise, while the student model 112 is operable to perform image analysis in a computationally efficient manner. However, the student model 112 may not, in aspects, have the ability to remove noise from an image to an extent comparable to the teacher model 110.

And while the teacher model 110 may scan and analyze an image with a higher level of accuracy relative to the student model 112, implementation of the teacher model 110 can be computationally more burdensome. As the teacher model 110 provides the advantage of increased noise reduction in an image and the student model 112 provides the advantage of computational efficient data processing, training the machine learning model using the teacher model 110 operating in conjunction with the student model 112 results in a knowledge distillation based ML model (e.g., the knowledge distillation based that is both computationally efficient and accurate. In short, training the knowledge distillation based ML model 102 using the teacher model 110 and the student model 112 enables the deployment of the knowledge distillation based ML model 102 in, e.g., surgical environments such as operating rooms, in which surgeons are provided with accurate data of a digital image (e.g., a medical image of, e.g., a cancerous or tumorous tissue) in near real-time. Moreover, training a machine learning model using both the teacher model 110 as described herein enables highly accurate medical imaging using a small architecture, which improves computational data processing efficiency.

In aspects, the teacher model 110 can include a cGAN machine learning model 300 (also referred to as the cGAN ML Model 300) trained on an original dataset 302 of OCT images. In aspects, the original dataset 302 can include a set of images that were scanned once for the purposes of medical imaging (1x images). The output of the cGAN ML model 300 generates ground truth data that is derived based on averaging of the once scanned images a total of eight times (8x images). It is noted that the averaging of eight times is a non-limiting example, as higher or lower averaging parameters can be utilized. In other words, the output of the cGAN machine learning model generates a ground truth that includes a set of scanned images that provide a set of more accurately scanned images relative to the accuracy (based on noise level) of original dataset 302 of OCT images. The ground truth data corresponds to a reduced noise dataset 304. In aspects, this reduced noise dataset 304 is utilized to train the student model 112, which can include a UNET machine learning model 306 (UNET ML Model 306). Training a UNET ML model 306 on a reduced noise dataset 304 results in the knowledge distillation based ML model 102 that accurately scans an image, e.g., of a cancerous or tumorous tissue, in a computationally efficient manner, approximately in real time.

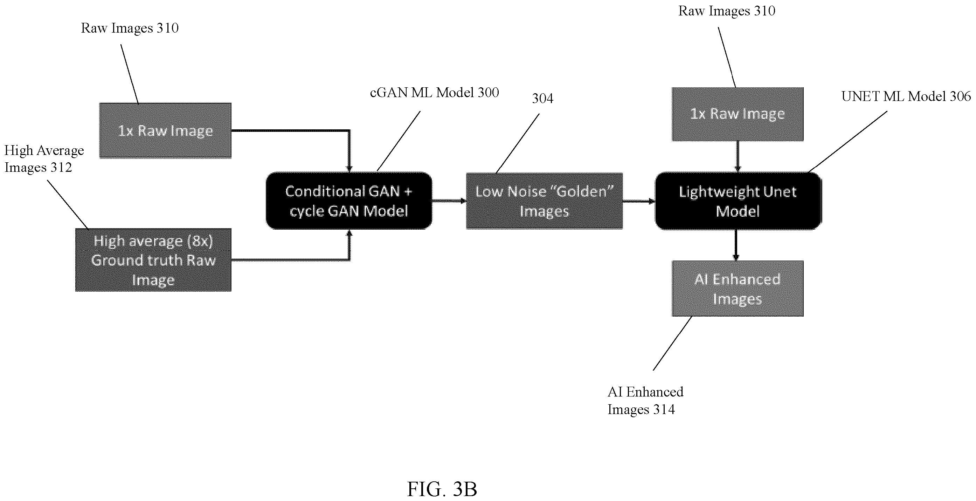

FIG. 3B illustrates a deep learning reconstruction framework utilized to train the knowledge distillation based machine learning model 102, according to some aspects described and illustrated herein. Specifically, the framework illustrated in FIG. 3B synthesizes higher quality images with various OCT based technical advances to accurately and efficiently remove noise from images, and improve the overall accuracy of WF-OCT in image margins. In aspects, the cGAN machine learning model 300 receives, as input, a set of raw images 310 and, as ground truth, a set of high average images 312 (e.g., images that have been scanned and averaged eight times, though higher or lower averages are contemplated). Based on this training, the cGAN ML model 300 learns noise characteristics and operates to generate a reduced noise dataset 304, which serves as a ground truth for training the UNET ML model 306. The UNET ML model also receives, as an input, the raw images 310. In other words, the UNET ML model 306 trains on the raw images 310, which serve as inputs, and the reduced noise dataset 304 that serve as ground truth in order to effectively scan and process digital images in a computationally efficient and accurate manner (e.g., generate AI enhanced images 314).

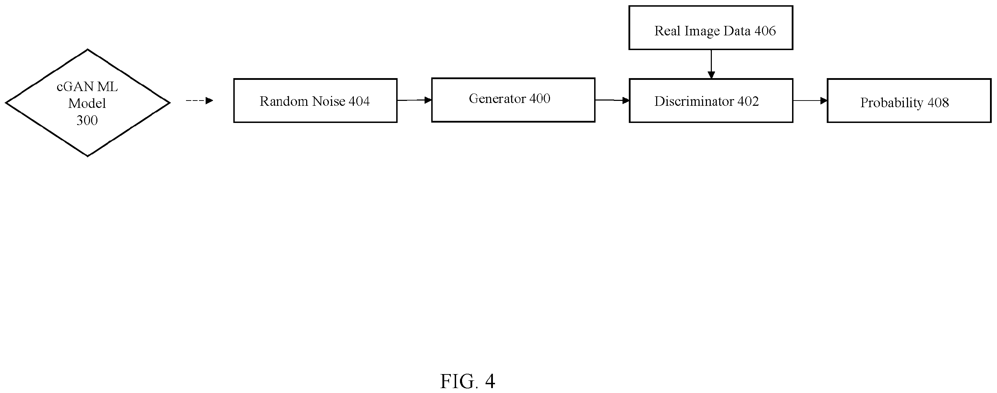

FIG. 4 illustrates an architectural overview of the cGAN ML model 300, according to some aspects described and illustrated herein. The cGAN ML model 300 operates to generate images having certain attributes. Broadly speaking, cGANs have two components - a generator 400 and a discriminator 402. Further, cGANs operate to guide the data creation process by incorporating various parameters (e.g., labels) into a Generative Adversarial Network. A key feature of the cGANs is that they can selectively modify features of a generated image by introducing and conditioning the generator 400 with, e.g., noise parameters, during the training phase.

The implementation of the cGAN training is a multi-step process. First, the generator 400 receives input in the form of data representative of random noise 404, which, when passed through the generator network of the generator 400, is mapped to one or more images in a data space. The output of the generator 400 is a set of one or more images that includes the data representative of the random noise 404. Second, the output of the generator 400 serves as input to the discriminator 402. The discriminator 402 also receives a plurality of real images (represented by real image data 406) as input and operates to evaluate the characteristics of images generated by the generator 400 relative to the real image data 406. The evaluation enables the discriminator 402 to generate a probability 408 representing a degree to which the images generated by the generator 400 are similar to one or more of the real images represented by the real image data 406.

Third, the probability generated by the discriminator 402 is routed back through to the generator 400, which utilizes the probability to update various weight parameters in order to generate images of a different quality, namely images having a quality that is more similar to the real images represented by the real image data 406. Multiple iterations of the probability generations and subsequent routings of these probabilities to the generator 400 for future image generations are performed such that (1) the generator 400 learns to generate better quality images (with each iteration) and (2) the discriminator 402 improves its ability to discern the real images from the images generated by the generator 400 (with each iteration).

The generator 400 and the discriminator 402 are trained using two separate and distinct loss functions. As the generator 400 operates to iteratively generate images (e.g., artificial or fake images) that marginally and gradually resemble the likeness of real images with each iteration, the loss function utilized by the generator 400 operates to reduce the differences between the probability 408 generated by the discriminator 402 and one or more of the real images.

It is noted that cGAN operates such that it enables mapping from an observed image (e.g., e.g., image x), a random vector (e.g., vector z), and a target image, e.g., image y. In aspects, the expectation of the conditional GAN loss function can be summarized using the following equation:

$$L_{cGAN} = E_{x,y}[\log D(x, y)] + E_{x,z}[\log(1 - D(x, G(x, z)))]$$

(1)

It is noted that the discriminator 402 operates to significantly improve (e.g., maximize) the difference between the real image and the generated fake image. With respect to Formula (1), the term D(x, y) represents the probability that (x, y) or (1x image, 8x image) is a real pair according to the discriminator's judgement. D(x, y) = 1 indicates the discriminator's classification of a real image, and D(x, y) = 0 indicates the discriminator's classification of a fake image. This term impacts the ability of the discriminator 402 to output high probabilities (close to 1) for real images. Taking the logarithm of a high probability (close to 1) results in a value close to 0, indicative of a less negative value. The second term is the expected value of the logarithm of one less the discriminator's output for fake images that is generated by the generator 400. This term impacts the ability of the discriminator 402 to output low probabilities (close to 0) for fake images. As the logarithm of values are close to 1, the term approaches a value of 0. As such, significantly improving (e.g., maximizing) this function enables the discriminator 402 to determine that the fake images are, indeed, fake. Meanwhile, the generator tries to make D(x,G(x, z)) as close to 1 as possible. Significantly reducing (e.g., minimizing) this function pushes the generator to fool the discriminator into treating generated fake denoised images as real 8x images. During the iteration, the discriminator 402 is always improved first. The loss function of the discriminator 402 corresponds to the following expression:

$$L_D = (l_{cGAN}(D(\text{real}), 1.0) + l_{cGAN}(D(\text{fake}), 0.0)) \times 0.5$$

(2)

Regarding formula (2), it is noted that lcGAN(D(real), 1.0) corresponds to the selected adversarial cGAN loss value between the real image pair (1x, 8x) and its target label 1.0, and lcGAN(D(fake), 0.0) refers to the selected cGAN loss value between the fake image pair (1x,G(1x)) and its target label 0.0. After the discriminator 402 is updated, the generator loss function corresponds to the following expression:

$$L_G = l_{cGAN}(G(x, z), 1.0) + \lambda \times l_{L1}(G(x, z), y)$$

(3)

In formula (3) above, the parameter $\lambda$ represents a weight for the second part of the generator loss, $l_{L1}$, which can be chosen from any kind of loss function. In this case, L1 is used. Further, the final version of the cGAN function can be represented as follows:

$$cGAN = \arg\min_{G} \arg\max_{D} L_{cGAN}(G, D) + \lambda \times l_{L1}(G(x, z), y)$$

(4)

Returning to FIG. 4, the iterative process of the generation of images by the generator 400 and the determination of probability by the discriminator 402 ends when a probability threshold is achieved. In other words, the training of the cGAN ends when a probability value generated by the discriminator 402 is equal to or lower than a threshold value, which indicates that at least one or a subset of images (artificial or fake images) generated by the generator 400 is within a threshold similarity level of one or more of the real images (represented by the image data 406).

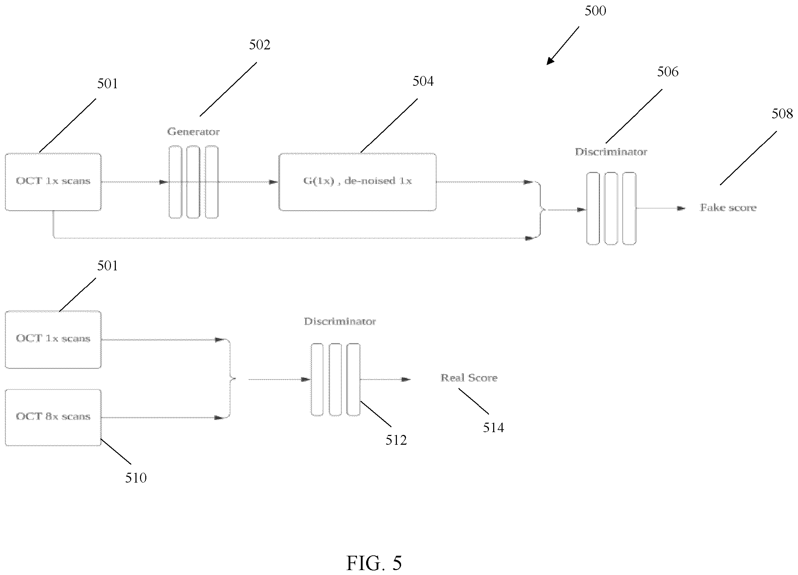

FIG. 5 illustrates a version 500 of the cGAN model implemented as part of the teacher model 110 as described in the present disclosure, according to one or more aspects described and illustrated herein. As illustrated, a plurality of single-scanned OCT images 501 are input into an example generator 502 that generates a set of artificial or de-noised images 504. These artificial images are routed to an example discriminator 506, which compares these with the single-scanned OCT images 501 and determines a probability, e.g., a fake score 508. In another example, the plurality of single-scanned OCT images 501 and a plurality of OCT images scanned eight times ("8x scanned OCT images") (510) are input to an example discriminator 512, which compares these two sets of images and outputs, e.g., a real score 514.

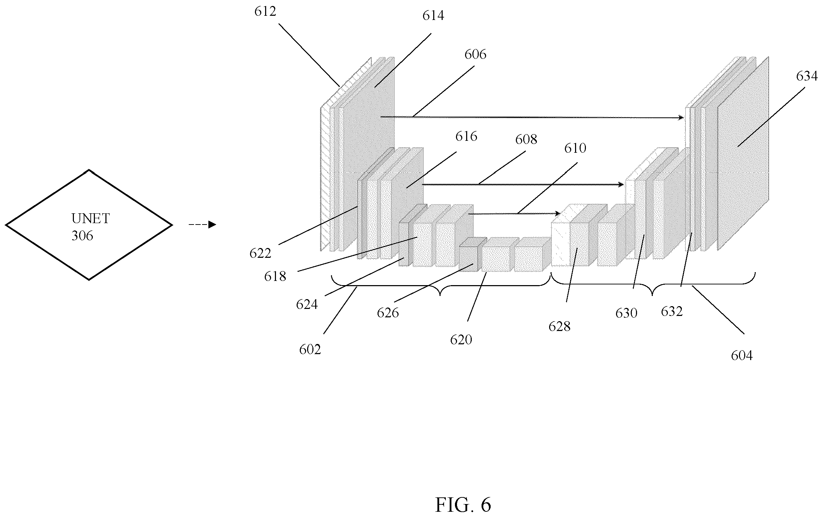

FIG. 6 illustrates an architectural overview of the UNET machine learning model 306, according to some aspects described and illustrated herein. Broadly speaking, UNET is a deep-learning model architecture useful for semantic segmentation - the task of classifying each pixel of an image within a class. The architecture of the UNET machine learning model 306 includes three distinct components - an encoder 602, a decoder 604, and a number of skip connections 606, 608, and 610. The encoder 602 operates to generate an output that is a compact representation of, e.g., one or more input images 612, namely a representation of the input image that is lower in dimensionality than the input image. Further, the encoder 602 operates to extract a plurality of features from the input images 612 or images using a combination of convolutional layers (e.g., convolutional layers 614, 616, 618, 620) and pooling layers (e.g., pooling layers 622, 624, and 626). Each of the convolutional layers operates to map a kernel (e.g., a matrix of weights) over each pixel in an image (amounting to a dot product operation) to extract feature data from each pixel of the image. Further, each of the pooling layers operate to reduce the dimensionality of the output received from a respective convolutional layer.

Further, each of the pooling layers operate to reduce the dimensionality of the output from each of the convolutional layers. Having reduced the dimensionality of image data, the UNET utilizes the decoder 604, which includes a plurality of deconvolution layers (e.g., decovolutional layers 628, 630, 632 operating in conjunction with the implementation of upsampling functions (not shown)), to increase the dimensionality of the data that is output by the encoder 602. In this way, the decoder 604 generates an output 634 that corresponds to a reconstructed version of the one or more input images 612 to the encoder 602 (e.g., the original image). Additionally, the UNET architecture includes a number of skip connections, e.g., skip connections 606, 608, and 610, which operate to pass or route information from the convolutional layers of the encoder 602 to the deconvolutional layers of the decoder 604.

The UNET architecture utilized to train the knowledge distillation based ML model 102 is reduced significantly by eliminating the use of a large number of parameters. Specifically, during model training, only 4,355 parameters are utilized, which results in approximately a 99.96% reduction in the model size. Consequently, the time associated with scanning an image using the knowledge distillation based ML model 102 is also reduced by approximately 97.21%. Table 1, provided below, lists the number of parameters utilized for each of the teacher model 110 and the student model 112 and the interference times associated with the implementation of each model.

Table 2

|  | NUMBER OF PARAMETERS | INTERFERENCING TIME |
| --- | --- | --- |
| Teacher Model (cGAN) | 11.4M | 157.99ms |
| Student Model (UNET) | 4.4K | 5.001ms |

Further, it is noted that the training of the knowledge distillation based ML model 102 is performed in two separate. The first step involves the use of the cGAN machine learning model 300 for generating a reduced noise dataset 304, and the second step involves training the UNET machine learning model 306 on the reduced noise dataset 304.

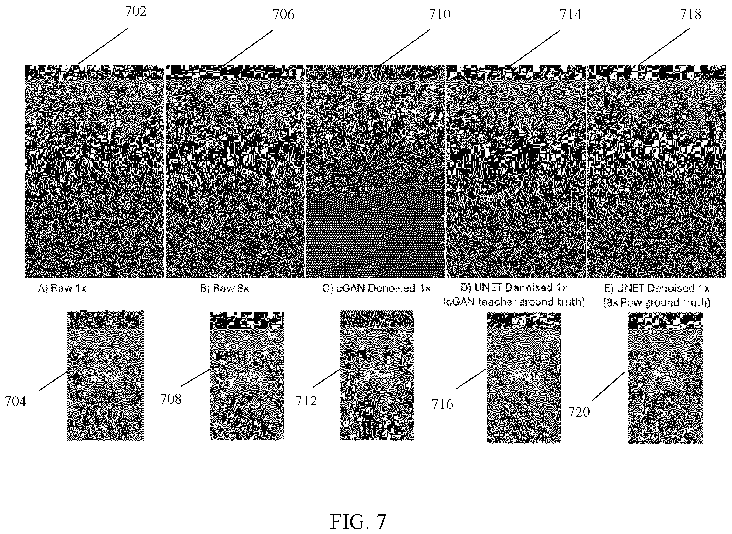

FIG. 7 summarizes the results of the knowledge distillation based ML model 102 trained using the reduced noise dataset 304 as compared to various other results, according to some embodiments described and illustrated herein. As illustrated in FIG. 7, an example image 702 corresponds to a single scanned (1x scan) conventional reconstruction image, which shows significant noise present in the bottom portion of the image. The significant noise is illustrated in an example expanded image 704 representing a region of interest of the example image 702. Example image 706 depicts a conventional reconstruction image that is scanned and averaged a total of eight times (8x averaging). As such, the example image 706 indicates a significant reduction in noise, which is illustrated in expanded example image 708. However, as stated above, it is noted that the scanning and averaging of the reconstruction image (e.g., 8 times) is computational burdensome and time intensive.

Example image 710 illustrates an example image 710, e.g., the single scanned (1x scan) conventional reconstruction image that has been processed using the teacher model 110 (e.g., the cGAN machine learning model 300). As shown in example expanded image 712, the processing of the example image 710 using the teacher model 110 results in a significant reduction in noise, but the use of the teacher model 100 is also computationally burdensome and time intensive. Example image 714 illustrates the processing of the single scanned conventional reconstruction image using the student model 112 (UNET ML Model 306) and the results of the teacher model 110 as ground truth. As shown in expanded image 716, a significant amount of noise has been removed from the image as a result of the UNET ML Model 306 processing an image in conjunction with the teacher model 110 (cGAN ML model 300). Further, the results as illustrated in the expanded image 716 are achievable in a computationally efficient manner and can be generated nearly in real time. Example image 718 illustrates the results of processing, using UNET ML Model 306, of images that have previously been scanned and averaged eight times. In other words, the UNET ML Model 306 utilizes as ground truth, a set of images that have been scanned and averaged eight times. While using this technique results in significant noise reduction, as illustrated in example expanded image 720, it is more computational burdensome relative to processing an image using the UNET ML model 306 operating in conjunction with the cGAN ML model 300.

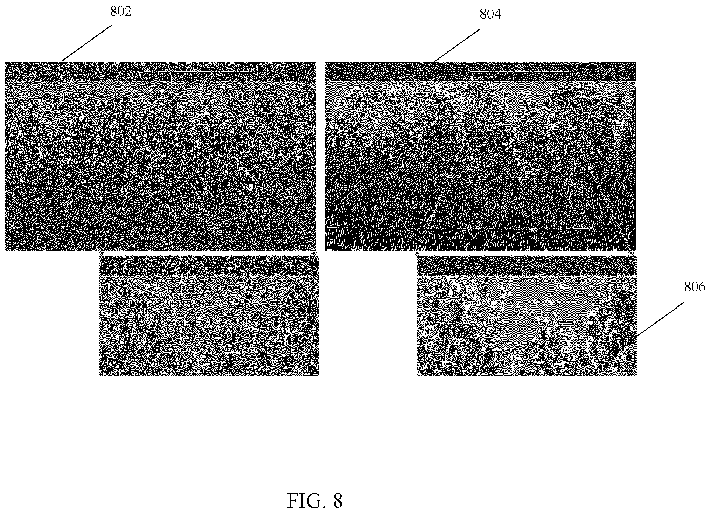

FIG. 8 illustrates the results of an image that is enhanced using the knowledge distillation based machine learning model 102 of the present disclosure, according to some aspects described and illustrated herein. Specifically, example image 802 (a single scanned image), which is processed through conventional imaging techniques, includes a significant amount of noise while the same image, when processed using the knowledge distillation based machine learning model 102 of the present disclosure (example image 804), indicates significant improvement in noise reduction and image quality. The improved image quality is particularly visible in a cropped region 806.

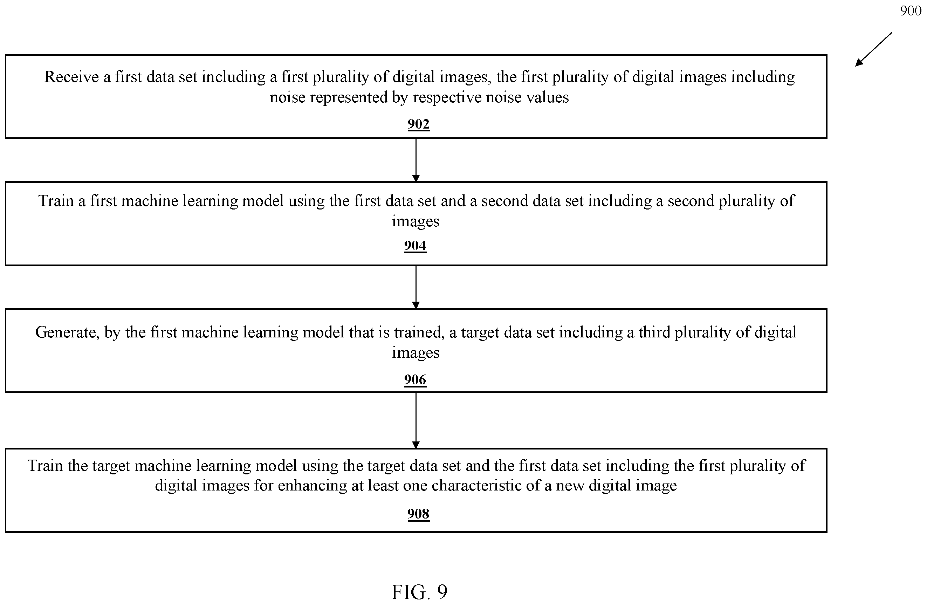

FIG. 9 depicts a flow chart 900 listing a set of steps for training the knowledge distillation based machine learning model 102 of the present disclosure, according to some aspects described and illustrated herein. As illustrated, at block 902, a first data set including a first plurality of digital images can be received. The first plurality of digital images include noise represented by a respective noise values. Noise represents random variations of one or more pixels of an image and, when present in an image, obscures one or more aspects of the image. Broadly speaking, the higher the noise in an image, the lower the image's quality and the lower the image's signal to noise ratio and contrast to noise ratio. As such, noise has an inversely proportional relationship with signal to noise ratio and contrast to noise ratio.

At block 904, a first machine learning model is trained using the first data set and a second data set including a second plurality of digital images. As described above, the first machine learning model is the teacher model 110, which includes the cGAN machine learning model 300. Further, as described above and illustrated in FIG. 3B, the first data set corresponds to a set of raw images (e.g., raw images 310) that have been scanned, e.g., once, and which include a large number of artifacts. The second data set including the second plurality of images correspond to high average images 312, e.g., images that have been scanned approximately eight times and which have noise (represented by respective noise values) that are lower than the respective noise values of the first plurality of images. As a result, it can be said that the second plurality of images included as part of the second data set are more enhanced (e.g., de-noised or have lower noise) than the first plurality of images in the first data set. Consequently, the signal to noise ratios and the contrast to noise ratios of the second plurality of images are higher than the signal to noise ratios and the contrast to noise ratios of the first plurality of images.

At block 906, a target data set including a third plurality of images is generated by the first machine learning model that is trained, e.g., on the raw images 310 as input and the high average images 312 as the ground truth. The target data set corresponds to a the reduced noise dataset 304, which includes images having noise (represented by respective noise values) that are lower than the noise present in the first plurality of digital images.

At block 908, a target machine learning model is trained using the target data set and the first data set including the first plurality of images for enhancing at least one characteristic of a new digital image. The target machine learning model corresponds to the UNET machine learning model 306 and the target data set, as described above, corresponds to the reduced noise dataset 304. The training of the UNET machine learning model 306 corresponds to the knowledge distillation based machine learning model 102 operable to scan images in a computationally efficient manner while simultaneously generating images having noise levels lower than the first plurality of images. Further, new digital images generated by the knowledge distillation based machine learning model 102 - the UNET machine learning model 306 that is trained on the reduced noise dataset 304, have noise levels (e.g., at least one characteristic of the new digital image). In this way, the knowledge distillation based machine learning model 102 operates to enhance at least one characteristic of a new digital image, namely by reducing noise presented in the new digital image, which in turn improves the image's SNR, CNR, image quality, and image resolution.

The training and use of the knowledge distillation based machine learning model 102 as described in the present disclosure has several advantages. In aspects, the use of the knowledge distillation based machine learning model 102 reduces SNR and CNR and computational data processing burdens, while simultaneously improving image quality. The use of the knowledge distillation based machine learning model 102 may enable, e.g., a 15 minute reduction in the image analysis, thereby significantly reducing the time that it takes for, e.g., a surgeon in an operating room to analyze medical images and determine whether a cancerous tissue has been accurately excised.

In aspects, the training and implementation of the knowledge distillation based machine learning model 102 of the present disclosure results in a reduction in the number of scan averages by approximately 100% (e.g., from 2x to 1x). Further, in aspects, a 30% reduction in scan time per margin translates to approximately 5 minutes of total scan time reduction across, e.g., multiple margins (e.g., 6 margins). There is a significant improvement in image quality as well. Specifically, there is a 200% improvement in both SNR and CNR and a significant improvement in sharpness of an image. For example, the images generated by the knowledge distillation based machine learning model 102 have much lower noise levels and higher SNR and CNR levels. Consequently, the images generated by the knowledge distillation based machine learning model 102 are enhanced such that these images have higher image resolutions enable higher density measurements of, e.g., cancerous or tumorous tissue. In aspects, the use of Widefield Optical Coherence Tomography Angiography (WF-OCT) for key tissue types including, e.g., breast, heart, kidney, spleen, thyroid, liver, lung, adrenal, pancreas, and colon, have provided advantageous results.

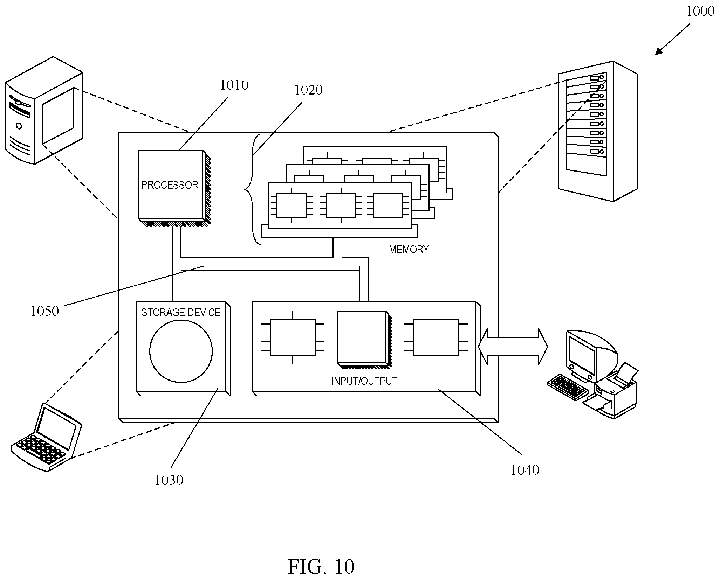

FIG. 10 illustrates a schematic diagram of an example computing system 1000 is provided. For example, the example computing system 1000 can be included in any or all of the server components discussed herein with reference to FIG 1. The example computing system 1000 includes a processor 1010, a memory 1020, a storage device 1030, and an input/output device 1040. The components 1010, 1020, 1030, 1040 are interconnected using a system bus 1050. The processor 1010 is capable of processing instructions for execution within the example computing system 1000. In one implementation, the processor 1010 is a single-threaded processor. In another implementation, the processor 1010 is a multi-threaded processor. The processor 1010 is capable of processing instructions stored in the memory 1020 or on the storage device 1030 to display graphical information for a user interface on the input/output device 1040.

The memory 1020 stores information within the example computing system 1000. In one implementation, the memory 1020 is a computer-readable medium. In one implementation, the memory 1020 is a volatile memory unit. In another implementation, the memory 1020 is a non-volatile memory unit. The storage device 1030 is capable of providing mass storage for the example computing system 1000. In one implementation, the storage device 1030 is a computer-readable medium. In various different implementations, the storage device 1030 can be a floppy disk device, a hard disk device, an optical disk device, or a tape device. The input/output device 1040 provides input/output operations for the example computing system 1000. In one implementation, the input/output device 1040 includes a keyboard and/or pointing device. In another implementation, the input/output device 1040 includes a display unit for displaying graphical user interfaces.

The features described can be implemented in digital electronic circuitry, or in computer hardware, firmware, software, or in combinations of them. The apparatus can be implemented in a computer program product tangibly embodied in an information carrier (e.g., in a machine-readable storage device, for execution by a programmable processor), and method steps can be performed by a programmable processor executing a program of instructions to perform functions of the described implementations by operating on input data and generating output. The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors of any kind of computer. Generally, a processor will receive instructions and data from a read-only memory or a random access memory or both. Elements of a computer can include a processor for executing instructions and one or more memories for storing instructions and data. Generally, a computer can also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the features can be implemented on a computer having a display device such as a CRT (cathode ray tube) or LCD (liquid crystal display) monitor for displaying information to the user and a keyboard and a pointing device such as a mouse or a trackball by which the user can provide input to the computer.

The features can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, for example, a LAN, a WAN, and the computers and networks forming the Internet.

The computer system can include clients and servers. A client and server are generally remote from each other and typically interact through a network, such as the described one. The relationship of client and server arises by virtue of computer programs running on the respective computers and having a client-server relationship to each other.

In addition, the logic flows depicted in the figures do not require the particular order shown, or sequential order, to achieve desirable results. In addition, other steps can be provided, or steps can be eliminated, from the described flows, and other components can be added to, or removed from, the described systems. Accordingly, other implementations are within the scope of the following claims.

A number of implementations of the present disclosure have been described. Nevertheless, it will be understood that various modifications can be made without departing from the spirit and scope of the present disclosure. Accordingly, other implementations are within the scope of the following claims.

One or more aspects or features of the subject matter described herein can be realized in digital electronic circuitry, integrated circuitry, specially designed ASICs, field programmable gate arrays (FPGAs) computer hardware, firmware, software, and/or combinations thereof. These various aspects or features can include implementation in one or more computer programs that are executable and/or interpretable on a programmable system including at least one programmable processor, which can be special or general purpose, coupled to receive data and instructions from, and to transmit data and instructions to, a storage system, at least one input device, and at least one output device. The programmable system or computing system can include clients and servers. A client and server are generally remote from each other and typically interact through a communication network. The relationship of client and server arises by virtue of computer programs running on the respective computers and having a client-server relationship to each other.

These computer programs, which can also be referred to as programs, software, software applications, applications, components, or code, include machine instructions for a programmable processor, and can be implemented in a high-level procedural and/or object-oriented programming language, and/or in assembly/machine language. As used herein, the term "machine-readable medium" refers to any computer program product, apparatus and/or device, such as for example magnetic discs, optical disks, memory, and Programmable Logic Devices (PLDs), used to provide machine instructions and/or data to a programmable processor, including a machine-readable medium that receives machine instructions as a machine-readable signal. The term "machine-readable signal" refers to any signal used to provide machine instructions and/or data to a programmable processor. The machine-readable medium can store such machine instructions non-transitorily, such as for example as would a non-transient solid-state memory or a magnetic hard drive or any equivalent storage medium. The machine-readable medium can alternatively or additionally store such machine instructions in a transient manner, such as for example, as would a processor cache or other random access memory associated with one or more physical processor cores.

To provide for interaction with a user, one or more aspects or features of the subject matter described herein can be implemented on a computer having a display device, such as for example a cathode ray tube (CRT) or a liquid crystal display (LCD) or a light emitting diode (LED) monitor for displaying information to the user and a keyboard and a pointing device, such as for example a mouse or a trackball, by which the user can provide input to the computer. Other kinds of devices can be used to provide for interaction with a user as well. For example, feedback provided to the user can be any form of sensory feedback, such as for example visual feedback, auditory feedback, or tactile feedback; and input from the user can be received in any form, including acoustic, speech, or tactile input. Other possible input devices include touch screens or other touch-sensitive devices such as single or multi-point resistive or capacitive track pads, voice recognition hardware and software, optical scanners, optical pointers, digital image capture devices and associated interpretation software, and the like.

Further non-limiting aspects or aspects are set forth in the following numbered clauses:

Clause 1: A computer-implemented method for training a target machine learning model for enhancing a digital image, the computer-implemented method comprising receiving a first data set including a first plurality of digital images, the first plurality of digital images including noise represented by respective noise values, training a first machine learning model using the first data set and a second data set including a second plurality of digital images, the second plurality of digital images including noise represented by respective noise values lower than respective noise values of the first plurality of digital images, generating, by the first machine learning model that is trained, a target data set including a third plurality of digital images, the third plurality of digital images having noise represented by respective noise values that are lower than the noise represented by the respective noise values of the first plurality of digital images, and training the target machine learning model using the target data set and the first data set including the first plurality of digital images for enhancing at least one characteristic of a new digital image, the enhancing including reducing a new noise value specific to the new digital image.

Clause 2: The computer-implemented method of clause 1, wherein the noise values represent random variations of one or more pixels of at least one of the first plurality of digital images.

Clause 3: The computer-implemented method of clause 1, wherein the noise values obscuring an aspect of at least a digital image of the first plurality of digital images.

Clause 4: The computer-implemented method of clause 1, wherein noise values are inversely proportional to signal to noise ratios of the first plurality of digital images.

Clause 5: The computer-implemented method of clause 1, wherein noise values are inversely proportional to contrast to noise rations of the first plurality of digital images.

Clause 6: The computer-implemented method of clause 1, wherein the first machine learning model corresponds to a cGAN machine learning model.

Clause 7: The computer-implemented method of clause 1, wherein the target machine learning model corresponds to a UNET machine learning model.

Clause 8: A system comprising one or more computers, and one or more storage devices on which are stored instructions that are operable, when executed by the one or more computers, to cause the one or more computers to perform operations comprising receiving a first data set including a first plurality of digital images, the first plurality of digital images including noise represented by respective noise values, training a first machine learning model using the first data set and a second data set including a second plurality of digital images, the second plurality of digital images including noise represented by respective noise values lower than respective noise values of the first plurality of digital images, generating, by the first machine learning model that is trained, a target data set including a third plurality of digital images, the third plurality of digital images having noise represented by respective noise values that are lower than the noise represented by the respective noise values of the first plurality of digital images, and training a target machine learning model using the target data set and the first data set including the first plurality of digital images for enhancing at least one characteristic of a new digital image, the enhancing including reducing a new noise value specific to the new digital image.

Clause 9: The system of clause 8, wherein the noise values represent random variations of one or more pixels of at least one of the first plurality of digital images.

Clause 10: The system of clause 8, wherein the noise values obscuring an aspect of at least a digital image of the first plurality of digital images.

Clause 11: The system of clause 8, wherein noise values are inversely proportional to signal to noise ratios of the first plurality of digital images.

Clause 12: The system of clause 8, wherein noise values are inversely proportional to contrast to noise ratios of the first plurality of digital images.

Clause 13: The system of clause 8, wherein the first machine learning model corresponds to a cGAN machine learning model.

Clause 14: The system of clause 8, wherein the target machine learning model corresponds to a UNET machine learning model.

Clause 15: A non-transitory computer readable storage media storing instructions that, when executed by one or more data processors, causes the one or more data processors to perform operations comprising receiving a first data set including a first plurality of digital images, the first plurality of digital images including noise represented by respective noise values, training a first machine learning model using the first data set and a second data set including a second plurality of digital images, the second plurality of digital images including noise represented by respective noise values lower than respective noise values of the first plurality of digital images, generating, by the first machine learning model that is trained, a target data set including a third plurality of digital images, the third plurality of digital images having noise represented by respective noise values that are lower than the noise represented by the respective noise values of the first plurality of digital images, and training a target machine learning model using the target data set and the first data set including the first plurality of digital images for enhancing at least one characteristic of a new digital image, the enhancing including reducing a new noise value specific to the new digital image.

Clause 16: The non-transitory computer readable storage media of claim 15, wherein the noise values represent random variations of one or more pixels of at least one of the first plurality of digital images.

Clause 17: The non-transitory computer readable storage media of claim 15, wherein the noise values obscuring an aspect of at least a digital image of the first plurality of digital images.

Clause 18: The non-transitory computer readable storage media of claim 15, wherein noise values are inversely proportional to contrast to noise ratios of the first plurality of digital images.

Clause 19: The non-transitory computer readable storage media of claim 15, wherein the first machine learning model corresponds to a cGAN machine learning model.

Clause 20: The non-transitory computer readable storage media of claim 15, wherein the target machine learning model corresponds to a UNET machine learning model.

In the foregoing description, aspects and aspects of the present disclosure have been described with reference to numerous specific details that can vary from implementation to implementation. Accordingly, the description and drawings are to be regarded in an illustrative rather than a restrictive sense. The sole and exclusive indicator of the scope of the invention, and what is intended by the applicants to be the scope of the invention, is the literal and equivalent scope of the set of claims that issue from this application, in the specific form in which such claims issue, including any subsequent correction. Any definitions expressly set forth herein for terms contained in such claims shall govern the meaning of such terms as used in the claims. In addition, when we use the term "further comprising," in the foregoing description or following claims, what follows this phrase can be an additional step or entity, or a sub-step/sub-entity of a previously-recited step or entity.

## Claims

1. A computer-implemented method for training a target machine learning model for enhancing a digital image, the computer-implemented method comprising:

   receiving a first data set including a first plurality of digital images, the first plurality of digital images including noise represented by respective noise values;
   training a first machine learning model using the first data set and a second data set including a second plurality of digital images, the second plurality of digital images including noise represented by respective noise values lower than respective noise values of the first plurality of digital images;
   generating, by the first machine learning model that is trained, a target data set including a third plurality of digital images, the third plurality of digital images having noise represented by respective noise values that are lower than the noise represented by the respective noise values of the first plurality of digital images; and
   training the target machine learning model using the target data set and the first data set including the first plurality of digital images for enhancing at least one characteristic of a new digital image, the enhancing including reducing a new noise value specific to the new digital image.

2. The computer-implemented method of claim 1, wherein the noise values represent random variations of one or more pixels of at least one of the first plurality of digital images.

3. The computer-implemented method of claim 1 or claim 2, wherein the noise values obscuring an aspect of at least a digital image of the first plurality of digital images.

4. The computer-implemented method of any preceding claim, wherein noise values are inversely proportional to signal to noise ratios of the first plurality of digital images.

5. The computer-implemented method of any of claims 1 to 3, wherein noise values are inversely proportional to contrast to noise ratios of the first plurality of digital images.

6. The computer-implemented method of claim 1, wherein the first machine learning model corresponds to a cGAN machine learning model and/or
wherein the target machine learning model corresponds to a UNET machine learning model.

7. A system comprising:

one or more computers; and
one or more storage devices on which are stored instructions that are operable, when executed by the one or more computers, to cause the one or more computers to perform operations comprising:

receiving a first data set including a first plurality of digital images, the first plurality of digital images including noise represented by respective noise values;
training a first machine learning model using the first data set and a second data set including a second plurality of digital images, the second plurality of digital images including noise represented by respective noise values lower than respective noise values of the first plurality of digital images;
generating, by the first machine learning model that is trained, a target data set including a third plurality of digital images, the third plurality of digital images having noise represented by respective noise values that are lower than the noise represented by the respective noise values of the first plurality of digital images; and
training a target machine learning model using the target data set and the first data set including the first plurality of digital images for enhancing at least one characteristic of a new digital image, the enhancing including reducing a new noise value specific to the new digital image.

8. The system of claim 7, wherein the noise values represent random variations of one or more pixels of at least one of the first plurality of digital images.

9. The system of claim 7 or claim 8, wherein the noise values obscuring an aspect of at least a digital image of the first plurality of digital images.

10. The system of any of claims 7 to 9, wherein noise values are inversely proportional to signal to noise ratios of the first plurality of digital images.

11. The system of any of claims 7 to 9, wherein noise values are inversely proportional to contrast to noise ratios of the first plurality of digital images.

12. The system of any of claims 7 to 11, wherein the first machine learning model corresponds to a cGAN machine learning model; and/or
wherein the target machine learning model corresponds to a UNET machine learning model.

13. A non-transitory computer readable storage media storing instructions that, when executed by one or more data processors, causes the one or more data processors to perform operations comprising:

receiving a first data set including a first plurality of digital images, the first plurality of digital images including noise represented by respective noise values;
training a first machine learning model using the first data set and a second data set including a second plurality of digital images, the second plurality of digital images including noise represented by respective noise values lower than respective noise values of the first plurality of digital images;

generating, by the first machine learning model that is trained, a target data set including a third plurality of digital images, the third plurality of digital images having noise represented by respective noise values that are lower than the noise represented by the respective noise values of the first plurality of digital images; and

training a target machine learning model using the target data set and the first data set including the first plurality of digital images for enhancing at least one characteristic of a new digital image, the enhancing including reducing a new noise value specific to the new digital image.

14. The non-transitory computer readable storage media of claim 15, wherein one of:

the noise values represent random variations of one or more pixels of at least one of the first plurality of digital images;

the noise values obscuring an aspect of at least a digital image of the first plurality of digital images; or

the noise values are inversely proportional to contrast to noise ratios of the first plurality of digital images.

15. The non-transitory computer readable storage media of claim 13 or 14, wherein the first machine learning model corresponds to a cGAN machine learning model; and/or

wherein the target machine learning model corresponds to a UNET machine learning model.

FIG. 1

EP 4 625 346 A1

$$SNR = \frac{avg(Signal_{ROI})}{std(Noise_{ROI})}$$

$$CNR = \frac{avg(Signal_{ROI}) - avg(Background_{ROI})}{std(Noise_{ROI})}$$

FIG. 2

FIG. 3A

FIG. 3B

FIG. 4

FIG. 5

FIG. 6

FIG. 7

FIG. 8

900

Receive a first data set including a first plurality of digital images, the first plurality of digital images including noise represented by respective noise values

**902**

Train a first machine learning model using the first data set and a second data set including a second plurality of images

**904**

Generate, by the first machine learning model that is trained, a target data set including a third plurality of digital images

**906**

Train the target machine learning model using the target data set and the first data set including the first plurality of digital images for enhancing at least one characteristic of a new digital image

**908**

FIG. 9

FIG. 10

EP 4 625 346 A1

**EUROPEAN SEARCH REPORT**

**Application Number**

EP 25 16 5689

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DAVID STOJANOVSKI ET AL: "Echo from noise: synthetic ultrasound image generation using diffusion models for real image segmentation", ARXIV.ORG, CORNELL UNIVERSITY LIBRARY, 201 OLIN LIBRARY CORNELL UNIVERSITY ITHACA, NY 14853, 15 August 2023 (2023-08-15), XP091580917, * abstract; sections 2 and 3; figures 1-5 * | 1-15 | INV. G06V10/26 G06V10/774 G06V10/82 G06T5/60 G06T7/00 |
| A | WANG MENG ET AL: "Semi-Supervised Capsule cGAN for Speckle Noise Reduction in Retinal OCT Images", IEEE TRANSACTIONS ON MEDICAL IMAGING, IEEE, USA, vol. 40, no. 4, 4 January 2021 (2021-01-04), pages 1168-1183, XP011847459, ISSN: 0278-0062, DOI: 10.1109/TMI.2020.3048975 [retrieved on 2021-04-01] * sections III-V; figures 1-13 * | 1-15 | |
| A | ZHANG TIANYANG ET AL: "Noise Adaptation Generative Adversarial Network for Medical Image Analysis", IEEE TRANSACTIONS ON MEDICAL IMAGING, IEEE, USA, vol. 39, no. 4, 27 September 2019 (2019-09-27), pages 1149-1159, XP011781002, ISSN: 0278-0062, DOI: 10.1109/TMI.2019.2944488 [retrieved on 2020-04-01] * sections II and III; figures 1-9 * | 1-15 | TECHNICAL FIELDS SEARCHED (IPC)<br><br>G06V<br>G06T |

-/--

The present search report has been drawn up for all claims

| Place of search | Date of completion of the search | Examiner |
|---|---|---|
| The Hague | 17 April 2025 | Atmatzidis, Lazaros |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                    

& : member of the same patent family, corresponding document

EPO FORM 1503 03.82 (P04C01)

Europäisches
Patentamt

European
Patent Office

Office européen
des brevets

**EUROPEAN SEARCH REPORT**

| Application Number |
| --- |
| EP 25 16 5689 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| A | YONGQIANG HUANG ET AL: "Noise-Powered Disentangled Representation for Unsupervised Speckle Reduction of Optical Coherence Tomography Images", ARXIV.ORG, CORNELL UNIVERSITY LIBRARY, 201 OLIN LIBRARY CORNELL UNIVERSITY ITHACA, NY 14853, 7 July 2020 (2020-07-07), XP081717485, * sections II and III; figures 1-14 * | 1-15 | |

TECHNICAL FIELDS
SEARCHED        (IPC)

The present search report has been drawn up for all claims

| Place of search | Date of completion of the search | Examiner |
| --- | --- | --- |
| The Hague | 17 April 2025 | Atmatzidis, Lazaros |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

............................................................................................

& : member of the same patent family, corresponding
  document

EPO FORM 1503 03.82 (P04C01)

page 2 of 2